# EUROPEAN PATENT APPLICATION

(11) **EP 4 458 226 A1**
(43) Date of publication of application: **06.11.2024**
(21) Application number: 21867890.2
(22) Date of filing: 29.12.2021
(51) Int. Cl.: A47J 36/32

(54) **ROBOTIC MACHINE FOR PREPARING MEALS**

(71) Applicant: WE TECH FOOD ROBOTICS S.L, 28660 Boadilla del Monte (ES)
(72) Inventor: ORELLANA FERRUFINO, Luis Rodrigo, 28660 Boadilla del Monte (ES); SALAZAR RIVERA, Román, 28660 Boadilla del Monte (ES); ESPADERO SÁNCHEZ, Jesús Felipe, 28660 Boadilla del Monte (ES)
(74) Representative: Isern Patentes y Marcas S.L.
(86) International application number: PCT/ES2021/070946
(87) International publication number: WO 2023/126548

(57) **Abstract**

The present invention comprises: a frame (1), with a vertically arranged structure; supports (3) for supporting preparation containers (4) intended to receive meal ingredients; selection means, comprising a user interface (5), for selecting the nature and order and, where appropriate, the weight, of the ingredients; solid-ingredient dispensing means (7), with an upper carousel (8) including recipients (9) with solid ingredients, for bringing the solid ingredients to the preparation containers (4); and sealing means (29) for receiving the preparation containers (4) with the solid ingredients and sealing the preparation containers (4) with a film (30). It enables meals to be prepared in an automated manner and said meals to be served with protective film (30). It may additionally include liquid-ingredient dispensing means (18) and metering means (13).

## Description

### Technical field of the invention

The present invention can be included within the food sector, in particular catering. More specifically, the object of the invention relates to a robotic machine for preparing meals.

### Background of the invention

In the food preparation sector, different robotic machines are known with a carousel of containers with various ingredients that are dispensed in a metered manner, from the containers to one or more pots so that in said pot they are mixed and heated, optionally together with sauces that are pumped from container tanks.

### Description of the Invention

The present invention describes a machine for robotically preparing meals in various environments, with protection against contamination and sabotage. The machine of the invention is described, according to the most general embodiment thereof, by the attached first claim. Other advantageous optional features are described by the dependent claims. The machine is applicable in the food takeaway sector. Additionally, it can be used in applications wherein a large number of meals have to be made during peak demand, such as in dining rooms, whether they are company dining rooms, or study centre dining rooms.

The machine of the invention enables meals to be prepared in an automated manner and said meals to be optionally served with a protective film.

For this, the machine of the invention includes several interconnected systems, which are vertically structured, causing the food to descend from the upper portion to the lower portion, where it is finally collected in the form of a poke by an operator.

### Brief description of the figures

The foregoing and other advantages and features will be more fully understood from the following detailed description of exemplary embodiments with reference to the accompanying drawings, which should be considered by way of illustration and not limitation, wherein:
- Figure 1 shows an outer schematic view of a casing that covers the machine, wherein the sealing means and the user interface can be seen.
- Figure 2 shows a simplified perspective view of an embodiment of the machine of the invention.
- Figure 3 shows a diagram of the movements of the bases.
- Figure 4 shows a detailed view of the dispensers of Figure 1.
- Figure 5 shows a detailed view of the upper portion of Figure 1, omitting the dispensers to expose the metering means.
- Figure 6 shows a detailed perspective view of the metering means.
- Figure 7 shows a detailed view of the upper portion of the machine.
- Figure 8 shows a schematic view of the dispensing means for dispensing liquid ingredients.

### List of references

- 1: Frame
- 2: Profiles
- 3: Supports
- 4: Preparation containers
- 5: User interface
- 6: Touch screen
- 7: Solid-ingredient dispensing means
- 8: Carousel
- 9: Receptacles
- 10: Dispensers
- 11: Movement means
- 12: Dispensing motor
- 13: Metering means
- 14: Metering units
- 15: Load cell
- 16: Rotating drum
- 17: Hatch
- 18: Liquid-ingredient dispensing means
- 19: Tanks
- 20: Pumps
- 21: Loading conduits
- 22: Unloading conduits
- 23: Conveyor
- 24: Ramp
- 25: Base
- 26: Head
- 27: Upward section
- 28: Downward section
- 29: Sealing means
- 30: Film

### Detailed description of a preferred embodiment of the invention

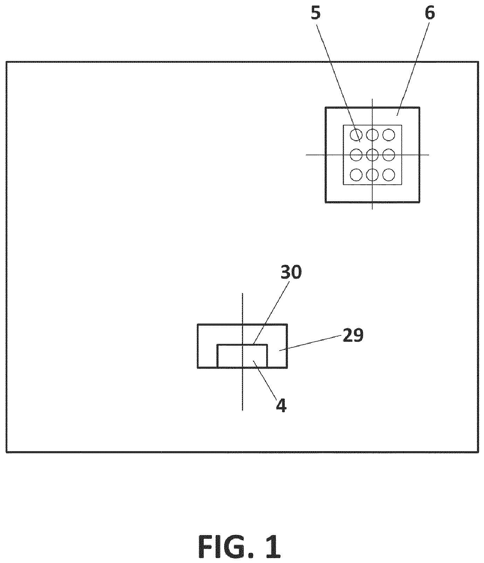

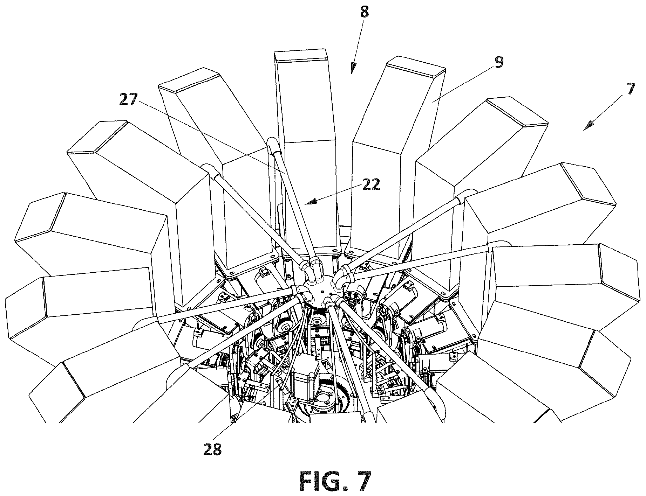

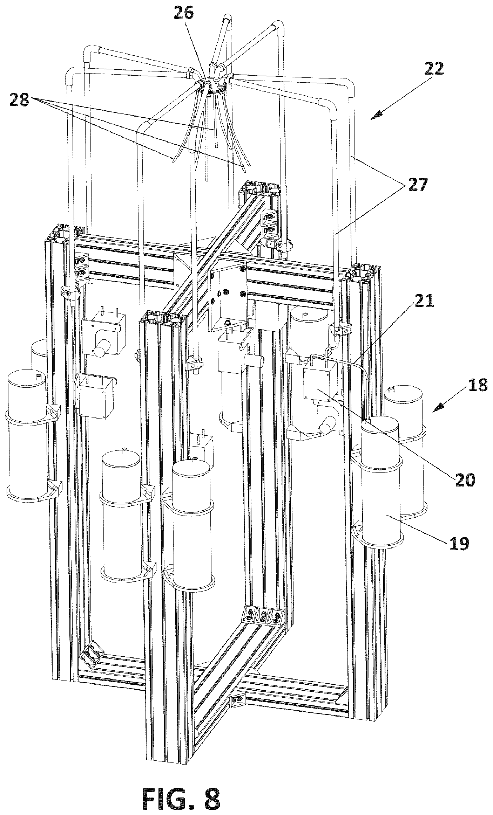

Next, with the aid of Figures 1-8 referred to above, a detailed description of an automated machine for making meals object of the present invention is provided.

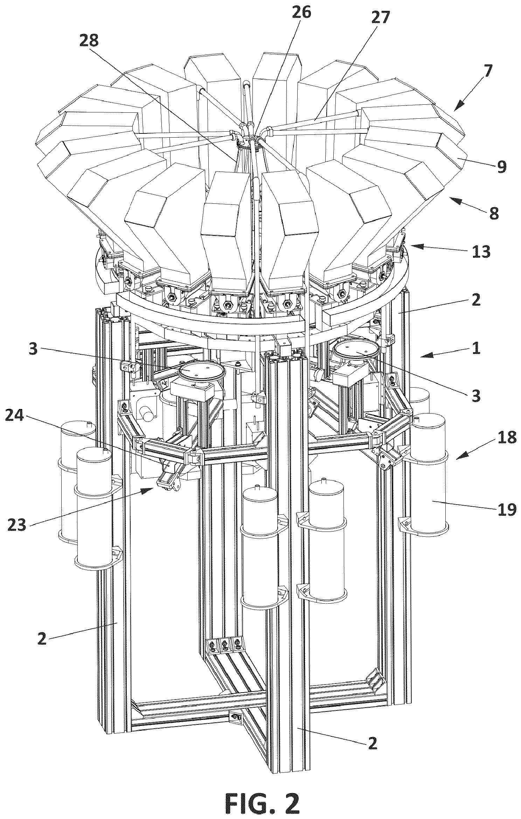

The machine of the invention, see Figures 2, 5 and 8, comprises a frame (1), which makes up a vertically arranged structure, intended to support the rest of the components. Preferably, it is a metal structure, comprising metal profiles (2), such as aluminium or steel, as well as fixing elements (not shown), for example, brackets, welds, etc., which serve to fix the profiles (2) to each other and to the rest of the components.

There are additionally one or more supports (3), mounted on the frame (1), according to Figure 2, for supporting preparation containers (4), wherein said preparation containers (4) are intended to receive solid ingredients and, where appropriate, liquid ingredients, which make up the meal prepared by the machine.

According to a less preferred embodiment, the supports (3) can maintain a constant height. However, it is preferred that the machine include at least one conveyor (23) to move the supports (3) between at least two positions, preferably three positions, as will be explained below. The positions comprise an inlet position, wherein an operator deposits the preparation container (4), usually a bowl that will be later served to a diner, a delivery person, etc. The positions further comprise at least one pouring position, higher than the inlet position, for receiving the solid ingredients and, where appropriate, the liquid ingredients. A single pouring position is envisaged, in principle, to serve both solid ingredients and liquid ingredients, although there could also be two pouring positions: a pouring position for solids and, preferably higher, a pouring position for liquids. Likewise, as will be explained later, the positions can include a sealing position, preferably at a level higher than the inlet position, but lower than any of the pouring positions, where appropriate, wherein heat sealing of the preparation container (4) with the ingredients already served is carried out.

The conveyor (23) preferably comprises, as shown in the figures, a ramp (24), with the positions at a lower level being further away and vice versa.

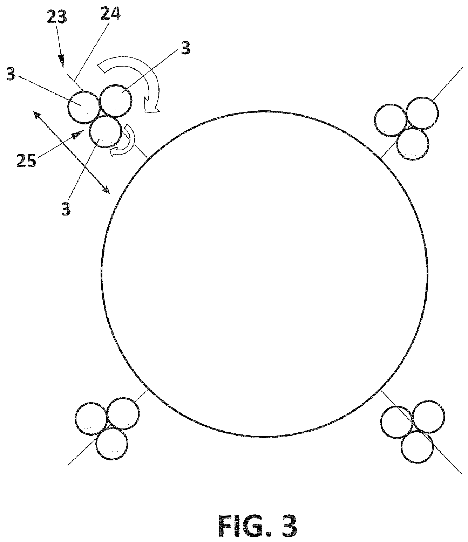

Likewise, in the preferred case of having several supports (3), for example, four, eight, or twelve, although there may be more, depending on the dimensions of the machine, it is proposed that the supports (3) be evenly distributed along a circumference, or several coaxial circumferences arranged at different height levels. However, in a more compact alternative embodiment, as outlined in Figure 3, there are bases (25) mounted on the conveyor (23), wherein each of the bases (25) supports a plurality of supports (3). The bases (25), in cooperation with the respective conveyors (23) thereof, are motorised to provide movement to the supports (3) that enables the supports (3) to be arranged to receive the ingredients and, where appropriate, to be heat sealed. One of the movements would be a positioning movement, as described above, to bring the bases (25), along with the supports (3), along the positions provided by the conveyors (23). The positioning movement is preferably, see Figure 3, a linear movement along the ramp (24). A preferred arrangement of the supports (4) on the bases (25) would be a circular arrangement. Accordingly, each base (25) may further be subjected to a vertical rotational, for example planetary, movement, with respect to a central vertical axis of the arrangement, to arrange the supports (3). Finally, as will be explained later, each support (3), regardless of whether it is mounted on a base (25), can be capable of rotating vertically with respect to the centre thereof, to receive the ingredients according to a predefined pattern.

Selection means are also included to determine which solid and, where appropriate, liquid ingredients are included in each of the meals prepared by the machine and, where appropriate, the order in which said ingredients are added to the corresponding preparation container. The selection means, shown in Figure 1, comprise a user interface (5), controlled by a control unit (not shown) and which enables an operator to select which ingredients and, where appropriate, in what order, what amount, and which location they will be poured into the preparation container (4) to compose the prepared meal, for example, via a touch screen (6), which can be attached to the frame (1), forming part of the machine, or which can be connected externally. The user interface (5) also enables the execution speed of the machine to be selected, in terms of rate of preparations per unit of time. The selection means make it possible to select a meal from a number of meals that are pre-recorded in a memory (not shown) which is accessible from the user interface (5), for example, via the control unit, or to manually select the composition of the meal from the solid and liquid ingredients available. Among the characteristics of the food, one or more of the following can be pre-recorded or manually selected: which ingredients (solid or liquid); what amount; in what order; defining an attractive presentation given the solid and, where appropriate, liquid ingredients, based on criteria that include aesthetic criteria.

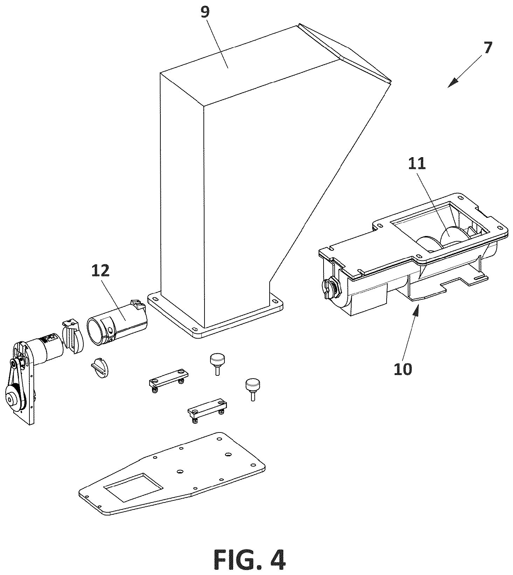

To bring the solid ingredients to the preparation containers (4), see Figures 2 and 4, there are solid-ingredient dispensing means (7), comprising a carousel (8), which is superiorly mounted on the frame (1). The carousel (8) contains a plurality of receptacles (9) that each house a solid ingredient or a mixture of ingredients that comprises at least one solid ingredient and that is intended to be dispensed together in the preparation container (4). Normally, the solid ingredients housed in the receptacles (9) do not need to be heated once they are in their corresponding receptacles (9); in other words, preferably, either the solid ingredients are intended to be consumed raw, for example, tomato, salmon, etc., or they have been cooked before being introduced into the receptacles (9), for example, pasta, chicken, etc., and are preferably intended to be consumed unheated.

According to the embodiment shown in the figures, the solid-ingredient dispensing means (7) comprise dispensers (10) by means of which the solid ingredients are dispensed from the receptacles (9) to the preparation containers (4). Preferably, each dispenser (10) is mounted at the lower portion of the corresponding receptacle (9) thereof, from which it receives the corresponding solid ingredient by gravity. The dispenser (10) includes movement means (11) for moving the ingredient, for example, a spindle, by way of an Archimedean screw, driven by a dispensing motor (12), to move the ingredient along the spindle, generally towards the inside of the frame (1).

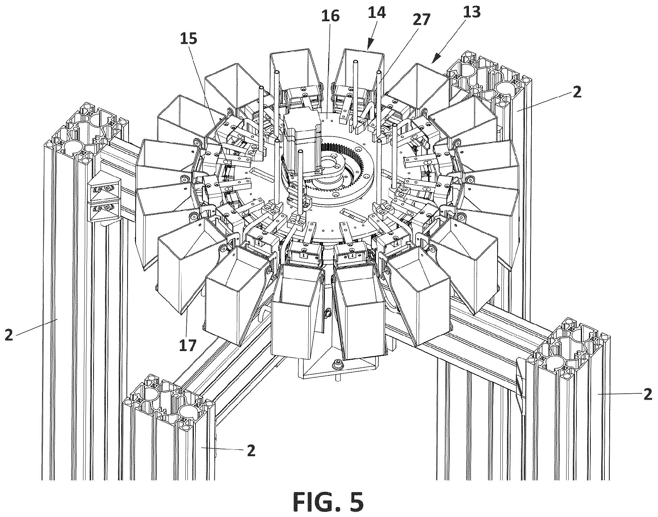

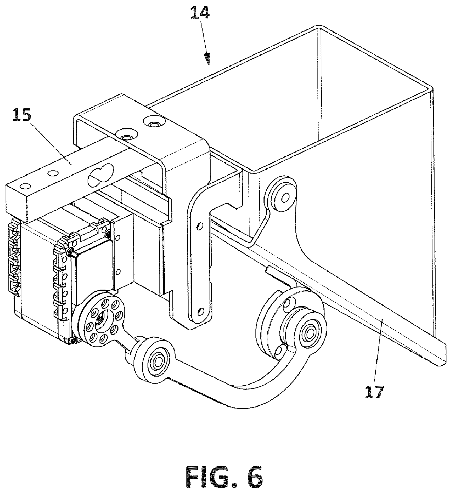

Optionally, metering means (13), illustrated by means of Figures 5 and 6, may also be included, including a plurality of metering units (14), preferably one metering unit (14) for each different solid ingredient, usually one metering unit (14) for each dispenser (10), to avoid cross contamination. Each metering unit (14) receives the solid ingredient from the dispenser (10) and supplies a predetermined amount of the solid ingredient to the preparation container (4). By way of example, the solid ingredient is being weighed, for example, by means of a load cell (15), and when a predetermined weight is reached, the movement means (11) of the dispenser (10) stop supplying the solid ingredient, and the solid ingredient is poured into the corresponding preparation container (4).

According to a less preferred embodiment, the metering units (14) can be integrally mounted each with the corresponding dispenser (10) thereof. In this case, or in the absence of metering units (14), the carousel (8) can be rotatable with respect to the frame (1) about a vertical axis, so that the control unit is configured to control the rotation of the carousel (8) to successively arrange, on the vertical of the corresponding preparation container (4), one of the receptacles (9) loaded with a corresponding predetermined solid ingredient. Subsequently, the corresponding dispenser (10) releases, from the receptacle (9), an amount of the solid ingredient, to access the metering unit (14) or to fall into the preparation container (4), preferably on the periphery of the preparation container (4). The preparation container (4) can be optionally controlled, as indicated in a previous paragraph in relation to the supports (3), to axially rotate a predetermined portion of a full turn before or after receiving each solid food item, so that solid food items are poured into different positions of the preparation container (4), without mixing with each other.

However, according to the embodiment shown in the figures, which is an alternative to the embodiment described in the previous paragraph, the carousel (8) is not rotatable and the metering units (14) are mounted on a rotating drum (16) with rotation, also vertical, that is independent from the carousel (8). In this way, when the corresponding metering unit (14) has already received the pre-established amount of solid food, the drum (16) rotates, for example, in order of proximity, or according to any other pre-established criterion, based on the number of preparation containers (4) and the workload of the machine, to bring the metering unit (14) onto the corresponding preparation container (4), for example, through a motorised hatch (17). After all the solid ingredients have been metered, the drum (16) can rotate towards a reference position in which each metering unit (14) meets the corresponding dispenser (10) thereof, to make a new recipe.

Preferably and optionally, the machine may additionally incorporate liquid-ingredient dispensing means (18) for dispensing liquid ingredients, such as sauces, as shown in Figures 2, 5, 7 and 8.

In particular, one or more tanks (19) each containing a sauce, preferably the tanks (19) arranged along a circumference about the frame (1), analogously to the preparation containers (4), are fixed to the frame (1). A pump (20) is also arranged, such as a motorized, peristaltic pump (20), to pump the sauce from each respective tank (19). Each pump (20) is connected to two conduits (21, 22): a loading conduit (21), which transports the sauce from the tank (19) to the pump (20); and an unloading conduit (22), which collects the sauce in the pump (20), and at the free end of which the sauce is poured into the preparation containers (4). Each support (3) can be rotatable to make the preparation container (4) axially rotate to distribute the sauces. Additionally, the descriptions of the movements explained above for the base (25) apply in this passage. Specifically, the supports (3), to be mounted on the bases (25) thereof, can be moveable, both linearly and angularly, to reproduce predefined distributions of the liquid ingredients and to be able to generate attractive arrangements controlled by the control unit and the selection means.

According to the preferred configuration shown in the figures, the dispensing means for dispensing liquid ingredients (18) include an upper head (26) that supports the unloading conduits (22). In this way, the unloading conduits (22) have an upward section (27) from the pump (20) to the head (26), and a downward section (28) from the head (26) to the free end through which the liquid ingredient is poured.

Advantageously, the machine of the invention comprises sealing means (29), see Figure 1 which, once the solid ingredients and, where appropriate, the liquid ingredients have been served, receive, either automatically and/or manually, the preparation container (4) with the ingredients, to seal it with a film (30), either transparent or of another type, such as paper, etc. According to a preferred example, the preparation container (4) is directed, from the sealing position on the conveyor (23), towards the sealing means (29) and, once sealed, it is returned again to the conveyor (23) and transferred to the inlet position, to be collected by an operator or a diner.

## Claims

1. A robotic machine for preparing meals, **characterised in that** it comprises:
- a frame (1), comprising a vertically arranged structure;
- one or more supports (3), mounted on the frame (1), for supporting preparation containers (4) intended to receive meal ingredients;
- selection means, comprising a user interface (5), controlled by a control unit, to select the nature and, where appropriate, the order of the ingredients poured into the preparation containers (4);
- solid-ingredient dispensing means (7), comprising a carousel (8), superiorly mounted on the frame (1), wherein the carousel (8) includes a plurality of receptacles (9) intended to house respective solid ingredients or mixture including solid ingredients, to bring the solid ingredients to the preparation containers (4); and
- sealing means (29) to receive the preparation containers (4) with the ingredients and seal the preparation containers (4) with a film (4).

2. The robotic machine for preparing meals, according to claim 1, **characterised in that** it additionally includes at least one conveyor (23) to move the support(s) (3) between at least two positions, wherein the positions include:
- an inlet position, to receive the preparation container (4); and
- at least one pouring position, higher than the inlet position, to receive the ingredients.

3. The robotic machine for preparing meals, according to claim 2, **characterised in that** it comprises two pouring positions: a pouring position for solids and, preferably higher, a pouring position for liquids.

4. The robotic machine for preparing meals, according to any of claims 2-3, **characterised in that** the conveyor (23) comprises a ramp (24), with the positions at a lower level being further away and vice versa.

5. The robotic machine for preparing meals, according to any of claims 2-4, **characterised in that** the positions include a sealing position, from which the sealing means (29) are accessed.

6. The robotic machine for preparing meals, according to any of claims 1-5, **characterised in that** it comprises a plurality of supports (3), as well as further includes bases (25), each one supporting several of the supports (3), the bases (25) being motorised to provide movement to the supports (3).

7. The robotic machine for preparing meals, according to claim 6, **characterised in that** the supports (3) are mounted on the bases (25) thereof according to a circular arrangement, each base (25) being rotatable with respect to a central vertical axis of the circular arrangement.

8. The robotic machine for preparing meals, according to any of claims 1-5, **characterised in that** the supports (3) are evenly distributed along a circumference, or along several coaxial circumferences arranged at different height levels, or according to a modular linear distribution.

9. The robotic machine for preparing meals, according to any of claims 1-8, **characterised in that** each dispenser (10) is mounted on the lower portion of the corresponding receptacle (9) thereof, from which it receives the corresponding solid ingredient by gravity.

10. The robotic machine for preparing meals, according to claim 9, **characterised in that** the solid-ingredient dispensing means (7) comprise dispensers (10) by means of which the solid ingredients are dispensed from the receptacles (9) to the preparation containers (4), wherein the dispensers (10) include movement means (11) for moving the solid ingredient.

11. The robotic machine for preparing meals, according to any of claims 1-10, **characterised in that** it additionally includes metering means (13), comprising a plurality of metering units (14) that receive the solid ingredient from the dispenser (10) to supply a predetermined amount of the solid ingredient to the preparation container (4).

12. The robotic machine for preparing meals, according to any one of claims 1-11, **characterised in that** the metering units (14) are each integrally mounted with the corresponding dispenser (10) thereof.

13. The robotic machine for preparing meals, according to any one of claims 1-10 and 12, **characterised in that** the carousel (8) is rotatable with respect to the frame (1) about a vertical axis, the control unit being configured to control the rotation of the carousel (8) to successively arrange, on the vertical of the corresponding preparation container (4), one of the receptacles (9) loaded with a corresponding predetermined solid ingredient.

14. The robotic machine for preparing meals, according to claim 13, **characterised in that** the carousel (8) is not rotatable and the metering units (14) are mounted on a rotating drum (16) with rotation, also vertical, that is independent from the carousel (8).

15. The robotic machine for preparing meals, according to any one of claims 1-14, **characterised in that** the preparation container (4) is controlled to axially rotate a predetermined portion of a full turn before or after receiving each solid food item.

16. The robotic machine for preparing meals, according to any one of claims 1-15, **characterised in that** it additionally incorporates liquid-ingredient dispensing means (18).

17. The robotic machine for preparing meals, according to claim 16, **characterised in that** the liquid-ingredient dispensing means (18) comprise:
- one or more tanks (19), fixed to the frame (1), each containing a liquid ingredient; and
- a pump (20) for pumping the liquid ingredient from each respective tank (19).

18. The robotic machine for preparing meals, according to claim 17, **characterised in that** the dispensing means for dispensing liquid ingredients (18) additionally comprise a respective loading conduit (21), which communicates the respective pump (20) thereof with the corresponding tank (19) thereof, and a respective unloading conduit (22), which collects the sauce from the pump (20), and at the free end of which the sauce is poured into the preparation containers (4).

19. The robotic machine for preparing meals, according to claim 18, **characterised in that** the dispensing means for dispensing liquid ingredients (18) further include an upper head (26) that supports the unloading conduits (22), the unloading conduits (22) comprising an upward section (27) from the pump (20) to the head (26), and a downward section (28) from the head (26) to the free end through which the liquid ingredient is poured.

20. The automated machine for preparing meals, according to any one of claims 17-19, **characterised in that** the tanks (19) are arranged along a circumference about the frame (1).

21. The automated machine for preparing meals, according to any one of claims 16-20, **characterised in that** each support (3) is rotatable to make the preparation container (4) axially rotate to distribute the liquid ingredients.

22. The automated machine for preparing meals, according to claim 21, **characterised in that** each support (3) is moveable, angularly and linearly, to distribute the liquid ingredients according to predefined patterns.

23. The automated machine for preparing meals, according to any one of claims 1-22, **characterised in that** the selection means and the control unit are configured to select one or more of the following features:
- what ingredients are included in the meal;
- amount of each ingredient;
- order of pouring the ingredients
- execution speed in time per meal or number of meals in a period of time.
